# EUROPÄISCHE PATENTSCHRIFT

(11) **EP 2 506 407 B1**
(45) Veröffentlichungstag und Bekanntmachung des Hinweises auf die Patenterteilung: **08.05.2019**
(21) Anmeldenummer: 12001757.9
(22) Anmeldetag: 14.03.2012
(51) Int. Cl.: H02K 26/00, H01F 7/122, H01F 7/14

(54) **Drehmagnet**
Rotating magnet
Aimant rotatif

(30) Priorität: 01.04.2011 DE 102011015867
(43) Veröffentlichungstag der Anmeldung: 03.10.2012
(73) Patentinhaber: SVM Schultz Verwaltungs-GmbH & Co. KG, 87700 Memmingen (DE)
(72) Erfinder: Willburger, Winfried, 88457 Kirchdorf (DE); Kreuzer, Daniel, 89293 Kellmünz (DE)
(74) Vertreter: Pfister, Stefan Helmut Ulrich

(56) Entgegenhaltungen:
- DE-A1- 1 464 532
- DE-A1- 3 317 426
- DE-A1- 19 510 925

## Beschreibung

Die Erfindung geht aus von einem Drehmagnet, bestehend aus einem Stator und einem um eine Drehachse drehbaren Rotor, wobei der Rotor eine Rotorwelle aufweist, auf welcher eine Rotorscheibe angeordnet ist und die Rotorscheibe, in Umfangsrichtung gesehen, alternierend magnetisch polarisierte Magnetpole aufweist und der Stator mindestens eine, Wicklungen von elektrischen Strom leitendem Draht tragende Spule aufnimmt und die Wicklungen die Drehachse umschließen und zwischen der Spule und der Rotorscheibe eine Polfläche vorgesehen ist, die zumindest aus zwei, der Magnetflußführung des von der durch Strombeaufschlagung der Wicklung der Spule erzeugten Magnetfeldes dienenden Polteilflächen besteht, wodurch an der Polfläche eine, bezogen
auf die Drehachse, in Umfangsrichtung gesehen, alternierende, magnetische Polarisierung besteht und zwischen der Rotorscheibe und der Polfläche ein Luftspalt besteht.

Die gattungsgemäßen Drehmagnete sind auf dem elektromagnetischen Prinzip beruhende Antriebe, bei welchen anstelle einer Längs- oder Longitudinalbewegung eine Drehbewegung resultiert. Gattungsgemäße Drehmagnete sind zum Beispiel als Drehproportionalmagnete bekannt, die aufgrund des Stromflusses durch die Wicklungen eine dem Stromfluss proportionale Drehbewegung ausführen.

Wird der Stromfluss durch die den Strom führende Wicklung der Spule abgeschaltet, so soll der Rotor wieder in seine Ausgangslage zurückgelangen. Im Stand der Technik ist es hierzu bekannt, eine Feder vorzusehen, gegen derer Federkraft die Drehbewegung bei Einschalten des Stromes erfolgt und deren gespeicherte Federenergie beim Ausschalten des Stromes zum Zurückstellen des Rotors dient. Der Einsatz von entsprechenden Rückstellfedern ist oftmals nicht günstig, da der Einbau der Federn zusätzlichen Platz im Drehmagneten benötigt. Des Weiteren besteht die Gefahr, dass die Rückstellfeder bricht und dann der gesamte Drehmagnet ausfällt. Gerade bei kleinbauenden Drehmagneten ist es oftmals auch sehr aufwendig und auch fehleranfällig, die filigrane Rückstellfeder einzubauen, was die Herstellungskosten oftmals erhöht.

Das Dokument DE 195 10 925 A1 offenbart eine elektromagnetische, um eine Achse drehbare Betätigungsvorrichtung mit einem Statormagnetkreis mit einem inneren Pol, welcher einen zentralen Kern und eine erste polare, den Kern an einem axialen Ende des Statorkreises verlängernde und eine Winkelausdehnung von annähernd gleich 180° aufweisende Erweiterung aufweist, und eine den zentralen Kern koaxial umgebende, einzelne Spule, wobei der Kern und die Spule relativ zur Drehachse exzentrisch angeordnet sind; und mit einem äußeren Pol, welcher außerhalb der Spule und parallel zum Kern einen seitlichen Anker in Rohrsektorform und eine zweite polare, den Anker an dem axialen Ende des Statorkreises verlängernde und eine Winkelerstreckung von annähernd gleich 180° aufweisende Erweiterung aufweist, wobei die zu den jeweiligen polaren Erweiterungen entgegengesetzten Enden des zentralen Kerns und des Ankers miteinander in Kontakt stehen.

Das Dokument DE 33 17 426 A1 offenbart einen Drehmagneten mit wenigstens einer Erregerspule, einem zumindest einpoligen, einen Polschuh aufweisenden Magnetkörper und einem mit dem Magnetkörper gleichpoligen, um einen vorbestimmten Drehwinkel um eine Drehachse drehbaren Anker, wobei der Luftspalt zwischen den Polen des Magnetkörpers und des Ankers über den gesamten Drehwinkelbereich gleichblebend ist und die wirksamen Eisenquerschnitte sich wenigstens über einen Teil des Drehwinkelbereichs in Abhängigkeit von der jeweiligen Drehstellung des Ankers ändern.

Das Dokument DE 14 64 532 A offenbart einen Drehmagneten mit feststehendem, elektromagnetisch erregtem Stator, wobei der Stator mindestens zwei Polstücke aufweist, und auf einem der Polstücke ein Rotor drehbar gelagert ist, dessen Polflächen an der Innenfläche wenigstens eines anderen Polstückes vorbeilaufen.

Ausgehend von diesem Stand der Technik ist es Aufgabe der vorliegenden Erfindung, eine Anordnung zu finden, die zumindest einen der vorgenannten Nachteile vermeidet.

Dies wird erfindungsgemäß durch einen Drehmagneten nach Anspruch 1 erreicht. Vorteilhafte Ausführungen sind in den Unteransprüchen beansprucht.

Zur Lösung dieser Aufgabe geht die Erfindung aus von einem Drehmagneten, wie eingangs beschrieben und schlägt vor, dass die Magnetpole der Rotorscheibe, der Luftspalt und die Polteilflächen der Polfläche Elemente des magnetischen Systems des
Drehmagneten bilden und zumindest ein Element des magnetischen Systems entlang der Umfangsrichtung, in Abhängigkeit des Drehwinkels des Rotors um die Drehachse, derart veränderlich ausgebildet ist, dass sich beim Abschalten des Stromes durch die Wicklungen der Spule ein den Rotor in die Ausgangslage zurückstellendes Drehmoment ergibt.

Der Pfiff der Erfindung liegt darin, dass auf den Einsatz des zusätzlichen Bauteils (einer Rückstellfeder) verzichtet wird. Die Aufgabe, ein zurückstellendes Drehmoment zur Verfügung zu stellen, wird auf die sowieso vorhandenen Elemente des magnetischen Systems übertragen und diese daher einer doppelten Nutzung zugeführt. Eine solche Ausgestaltung spart in mehrfacher Hinsicht Herstellungskosten, da auf ein zusätzliches Bauteil verzichtet wird, eine Feder eingespart wird und auch insgesamt der Drehmagnet bei sonst gleichbleibenden Parametern kleiner baut. Die Erfindung nützt dabei den Umstand aus, dass es das Grundbestreben eines Permanentmagneten ist, sich auf kürzestem Wege mit geringstem magnetischem Widerstand kurzzuschließen. Anders ausgedrückt, versucht das bewegliche System, das heißt, der mit Permanentmagneten ausgestattete Rotor, im Magnetfeld eine Position geringster (potenzieller beziehungsweise magnetischer) Energie einzunehmen. Geschickterweise ist dabei die Anordnung so gewählt, dass diese Energie bei Beginn der Auslenkbewegung (also in der Startstellung, Drehwinkel α=0°) minimal ist und somit das gesamte magnetische System dann einen Zustand geringster Energie aufweist, wenn sich dieses auch in der komplett zurückgestellten Lage befindet. Dies erreicht die Erfindung dadurch, dass zumindest ein (Teil)-Element des magnetischen Systems in Umfangsrichtung beziehungsweise Drehwinkelrichtung gesehen derart bezüglich seiner magnetischen Wirkung oder Eigenschaften inhomogen oder veränderlich ausgebildet ist, dass sich beim Abschalten des Stromes das auf einem höheren magnetischen Energieniveau befindliche System sofort in Richtung niedrige Energie zu verändern vermag und hierzu eine Drehbewegung in die Ausgangsposition durchführt.

Die Rotorscheibe weist in Umfangsrichtung (und somit auch in Abhängigkeit des Drehwinkels) gesehen alternierend magnetisch polarisierte Magnetpole, die als Permanentmagnete ausgebildet sind, auf. Diese Magnetpole sind ebenfalls ein Teil des magnetischen Systems. Es werden dann die magnetischen Eigenschaften in Umfangsrichtung beziehungsweise in Abhängigkeit des Drehwinkels eines, mehrerer oder aller Elemente des magnetischen System (Polteilfläche, Magnetpole und Luftspalt) derart inhomogen gestaltet, dass in der durch die Strombeaufschlagung in der Wicklung definierten Anfangslage der Rückstellbewegung des Rotors, wenn der Strom ausgeschalten wird, sofort ein rückstellendes Drehmoment zur Verfügung steht. Als Element des magnetischen Systems wird bereits eine Polteilfläche oder ein Magnetpol angesehen. Das heißt, bereits bei der in Umfangsrichtung gesehenen variablen Ausgestaltung der magnetischen Eigenschaft einer Polteilfläche oder eines Magnetpoles wird bereits der erfindungsgemäße Effekt erreicht, der natürlich bei wiederholtem Einsatz an anderen (Teil)-Elementen entsprechend erhöht oder multipliziert wird.

Hierzu ist es zum Beispiel vorgesehen, dass die miteinander zusammenwirkenden Flächen der Polteilfläche beziehungsweise die Oberflächen der Magnetpole in Abhängigkeit des Drehwinkels des Rotors um die Drehachse veränderlich sind, was durch eine entsprechende Gestaltung entweder der Polteilfläche oder der Oberfläche der Magnetpole oder durch beides erfolgt. Dies kann durch eine drehwinkelabhängige Ausgestaltung des Luftspaltes der zwischen der Oberfläche der Magnetpole und der Polfläche angeordnet ist, erreicht werden. Eine andere, gezielte Anordnung einer Inhomogenität im magnetischen System besteht darin, das Material des Permanentmagneten, welcher den Magnetpol bildet, zu variieren, zum Beispiel die Remanenz entsprechend durch Materialaustausch oder -änderung zu verändern.

Bei einem ersten Vorschlag wird die Polteilfläche bezüglich der Drehachse zumindest von einer innen und/oder außen liegenden, im wesentlichen in Umfangsrichtung verlaufenden Begrenzungskante begrenzt und insbesondere vorgeschlagen, dass zumindest eine Begrenzungskante spiralförmig verläuft. Durch diesen Vorschlag ergibt sich, dass die wirksame Breite (bezogen auf die Drehachse in radialer Richtung) in Abhängigkeit des Drehwinkels des Rotors um die Drehachse veränderlich ist und somit auch das magnetische System des Drehmagneten in Abhängigkeit des Drehwinkels variiert. Die Polteilfläche ist, wie sich insbesondere aus der Zeichnung ergibt, zumindest mit einer außen und/oder auch innen liegenden Begrenzungskante ausgestattet und es reicht aus, dass zumindest eine Begrenzungskante entsprechend spiralförmig verläuft, wobei natürlich auch beide Begrenzungskanten entsprechend ausgebildet sein können. Üblicherweise beschreibt die Begrenzungskante ein Kreisbogensegment. Der Begriff spiralförmig ist dabei nicht auf eine konkrete mathematische Form beschränkt auszulegen, sondern als spiralförmig wird im Sinne dieser Anmeldung bereits ein Verlauf der Begrenzungskante verstanden, bei welchem in Abhängigkeit des Drehwinkels der Abstand eines Punktes auf der Begrenzungskante von der Drehachse jeweils einen von dem Drehwinkel abhängigen veränderlichen Abstand aufweist.

Neben dem vorgeschlagenen Prinzip eine drehwinkelabhängige Inhomogenität in das Magnetsystem zu implementieren, wird vorgeschlagen, dass sich an die im wesentlichen in Umfangsrichtung verlaufende Begrenzungskante eine im wesentlich radial verlaufende Grenzkante anschließt und die Grenzkante zur Radialen, bezogen auf die Drehachse, geneigt, beziehungsweise schräg oder spiralförmig beziehungsweise geschwungen verläuft. Natürlich ist es auch möglich, dass die Grenzkante radial verläuft. Durch einen entsprechend variierten Verlauf der Grenzkante ergibt sich aber auch wieder ein sich mit dem Drehwinkel verändernde magnetische Eigenschaft der Polteilfläche beziehungsweise der Polfläche, die in geschickter Weise zur Bildung eines rückstellenden Drehmomentes ausgenutzt wird.

In einer bevorzugten Ausgestaltung ist vorgesehen, dass zwischen den Polteilflächen ein Polspalt vorgesehen, der sich in radialer Richtung bezogen auf die Drehachse erstreckt. Durch eine entsprechende Gestaltung der Polteilfläche, die von einem Polspalt randseitig begrenzt wird, ist es möglich, die rotations- oder punktsymmetrische Magnetfeldlinienverteilung, die normalerweise bei einer Strom durchflossenen Spule resultiert, so zu steuern, dass ein von der Rotations- oder Punktsymmetrie abweichender Magnetfeldlinienverlauf resultiert. Dabei nutzt der Vorschlag die Eigenschaft aus, dass durch die entsprechende Anordnung von die Magnetfeldlinien führendem weichmagnetischem Material (zum Beispiel geeigneter Eisenlegierung und ähnlichem) eine heterogene Verteilung der Magnetfeldlinien erfolgt. Dabei schließt die Erfindung natürlich nicht aus, dass zum Beispiel aus Herstellungsgründen bestehende Verbindungsbrücken zwischen beiden Polteilflächen den Polspalt überbrücken, durch eine solche (metallische oder magnetisch führende) Verbindungen wird allenfalls die Effizienz verschlechtert nicht aber der erfindungsgemäße Effekt verfehlt.

Des Weiteren wird vorgeschlagen, dass der Polspalt, der sich zwischen den beiden Polteilflächen ergibt, z.B. mit einem magnetisch weniger wirksamen oder unwirksamen Material befüllt ist oder der Polspalt als Polluftspalt ausgebildet ist.

Für die Erfindung ist es gleichwertig, ob der sich ergebende Polspalt befüllt oder offen ist. Das eingesetzte Verfüllmaterial, z.B. ein Polymer oder ähnliches, dient dazu, die Polteilflächen dicht miteinander zu verbinden, um einen magnetischen Feldlinienfluß möglichst zu unterdrücken, hierfür also möglichst isolierend zu sein.

Die Anordnung der unterschiedlichen Polteilflächen ist dabei so realisiert, dass in Umfangsrichtung (bezogen auf die Drehachse) gesehen eine alternierende, magnetische Polarisierung besteht.

Für eine inhomogene Ausgestaltung des magnetischen Systems dient dann zum Beispiel eine entsprechend asymmetrische Gestaltung der Anordnungen der Magnetpole auf der Rotorscheibe. Es ist aber auch möglich, die Polteilfläche asymmetrisch auszugestalten, um den erfindungsgemäßen Zweck zu erreichen.

In einem weiteren Vorschlag ist vorgesehen, dass die Polfläche eine oder mehrere innere und eine oder mehrere äußere Polteilflächen aufweist. Üblicherweise sind die Polteilflächen Teil des Stators, entweder des Mittelpols, welcher den Spulenkörper durchdringt und diesen hält, oder des Gehäuses, dessen Gehäusewand Ansatzpunkt für die äußere Polteilfläche darstellt. Durch die Anzahl der Polteilflächen und auch durch die Anzahl der einzelnen Magnetpole ist die Reichweite der Rückstellbewegung aber auch das resultierende Drehmoment entsprechend einstellbar. Mit einer verhältnismäßig geringen Anzahl von inneren und äußeren Polteilflächen beziehungsweise Magnetpole wird dabei ein Bereich von 30 bis 180° für den Wirkbereich des rückdrehenden Drehmomentes realisiert.

Mit einer entsprechend größeren Anzahl von Polteilflächen beziehungsweise Magnetpolen reduziert sich dieser Winkelbereich, üblicherweise wird ein Winkelbereich von 45° bis 180°, bevorzugt vom 45° bis 130° oder 150° angestrebt und erreicht.

Für die Ausgestaltung der Polfläche sind mehrere Varianten vorgesehen. Bevorzugt trägt der Mittelpol eine innere Polteilfläche, wohingegen an dem Gehäuserand eine oder mehrere äußere Polteilflächen angeordnet sind. Geschickterweise ist der Stator beziehungsweise Teile des Stators in die Führung des Magnetfeldes mit eingesetzt und erhöht somit erheblich die Effizienz, zum Beispiel die Kraftentfaltung, wobei diese Magnetfeldlinienführung nicht nur für den Fall der Bestromung der Spule eingesetzt wird, sondern auch wenn der Stromfluss durch die Spule abgeschaltet ist und dann das Magnetfeld des Permanentmagneten, wie beschrieben, für die Rückstellung des Rotors genützt wird.

Geschickterweise sind in den verschiedenen Polteilflächen unterschiedliche Magnetpole zugeordnet, die in geeigneter Weise mit den alternierend, magnetisch polarisierten Bereichen der Rotorscheibe zusammenwirken.

Der Stator ist in einer erfindungsgemäßen Variante so ausgestaltet, dass er die Spule umgibt beziehungsweise umschließt und als Gehäuse dient. Da die Spule rotationssymmetrisch, insbesondere zylinderförmig ausgestaltet ist, weist auch der Stator eine prinzipiell zylinderförmige oder topfartige Gestaltung auf. Die Anordnung ist dabei gegebenenfalls so gewählt, dass der Stator an der Außenseite und/oder Innenseite der Spule für Führungszwecke aufliegt. Erfindungsgemäß ist vorgesehen, dass der Stator einen die Spule durchdringenden und die zweite innere Polteilfläche tragenden, insbesondere dornartigen Mittelpol aufweist. Die Anordnung ist dabei so gewählt, dass der Schwerpunkt der zweiten, inneren Polteilfläche auf der Drehachse zum Liegen kommt. Hieraus re-sultiert eine möglichst exakte, zentrische Anordnung der inneren, zweiten Polteilfläche.

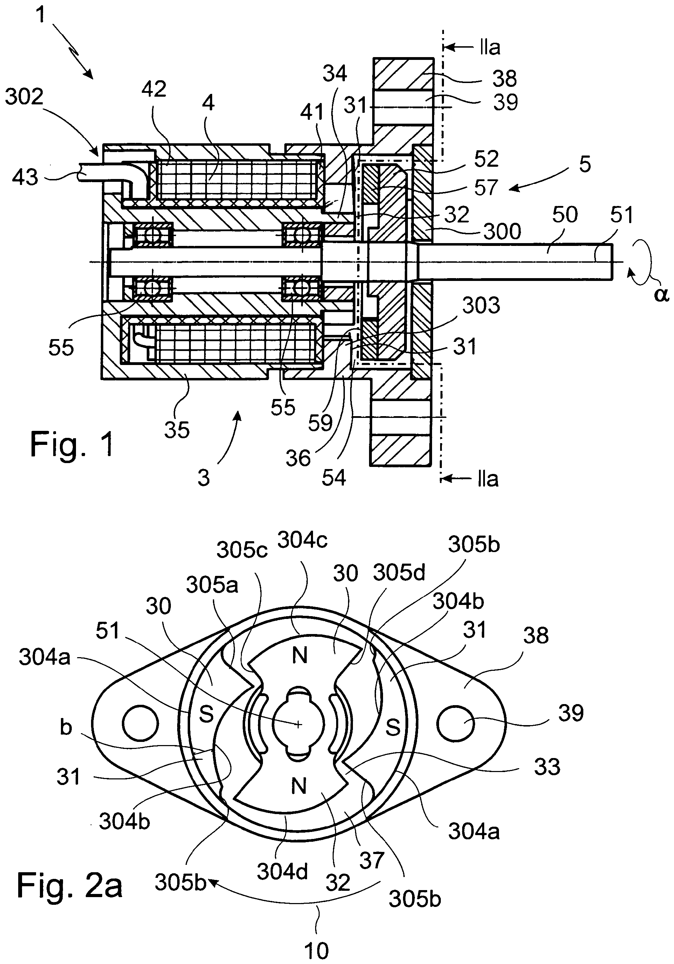

Erfindungsgemäß ist vorgesehen, dass der Stator der Magnetflussführung des von der durch Strombeaufschlagung der Wicklung der Spule erzeugten Magnetfeldes dient und bevorzugt aus weichmagnetischem Eisen gefertigt ist. Anstelle des weichmagnetischen Eisens können erfindungsgemäß alle anderen Materialien eingesetzt werden, die einer Führung des magnetischen Flusses optimal dienen. Wie sich insbesondere aus der Zeichnung (insbesondere aus Fig. 1) ergibt, ist der Stator topfartig ausgebildet mit einem zentrisch oder koaxial angeordneten Mittelpol. Gerade der äußere Bereich, der die Spule umschließt, wird geschickterweise zur Führung des Magnetfeldes eingesetzt, wodurch die Effizienz der gesamten Anordnung erheblich steigt. Da eine solche Anordnung im Stand der Technik im übrigen unbekannt ist, wird durch diese Maßnahme ein überraschender Vorteil erreicht, bei der dem Stator nun nicht nur die feststehende Aufgabe einer drehenden Anordnung zugeordnet ist, sondern dieser zusätzlich auch noch die Aufgabe einer Führung des Magnetfeldes sowie eine Gehäuseaufgabe übernimmt.

In einer Variante ist vorgesehen, dass der Stator mehrteilig ausgebildet ist und zumindest ein Mantelteil die Spule aufnimmt und ein Deckelteil am Mantelteil anschließt und dieses verschließt. Durch den mehrteiligen Aufbau ist es möglich, in einem ersten Teil, dem Mantelteil, die Spule einzusetzen und diesen durch einen zweiten Teil, den Deckelteil, zu verschließen. Zum Beispiel werden die beiden Teile miteinander verpresst oder verstemmt und so für eine optimale magnetische Flussführung miteinander verbunden. Neben diesen mechanischen Verbindungsverfahren sind natürlich auch andere Verbindungsverfahren erfindungsgemäß einsetzbar, hierzu zählen zum Beispiel das Verbinden mit Hilfe einer Schraubverbindung oder ein Verschweißen, Verkleben beziehungsweise Verlöten. Neben der hier beschriebenen zweiteiligen Ausgestaltung des Stators ist es natürlich auch möglich, den Stator aus mehreren Bauteilen, zum Beispiel drei oder mehr Bauteilen zu realisieren. Eine mehrteilige Ausgestaltung kann insbesondere fertigungstechnische Gründe und Vorzüge besitzen.

Geschickterweise ist die Anordnung so gewählt, dass der Stator eine Polteilfläche bildet, wobei diese (erste, äußere) Polteilfläche insbesondere in oder am Deckelteil angeordnet ist. Dabei wird vorgesehen, dass der Stator, insbesondere der Deckelteil, im Bereich der ersten Polteilfläche eine Ausnehmung zur Aufnahme der zweiten Polteilfläche besitzt und zum Beispiel die Kontur der Ausnehmung der Kontur der zweiten Polteilfläche entspricht, wobei sich zwischen beiden Polteilflächen zumindest teilweise ein Polluftspalt erstreckt.

Erfindungsgemäß ist auch umfasst, dass der Stator mehrere Polteilflächen in geeigneter Weise aufnimmt. Die Erfindung erstreckt sich insbesondere auf Varianten, die aus drei, vier oder noch mehr einzelnen Polteilflächen bestehen. Einstückig kann dabei natürlich eine Polteilfläche mit dem Stator beziehungsweise einem Teil des Stators (zum Beispiel dem Deckelteil) ausgebildet sein.

Es ist günstig, wenn für Befestigungszwecke am Deckelteil mindestens eine Befestigungsöffnung vorgesehen ist. Die Befestigungsöffnung ist zum Beispiel in einem flanschartigen Vorsprung angeordnet.

Erfindungsgemäß ist vorgesehen, dass die Rotorscheibe auf ihrer der Spule zugewandten Seite zumindest einen Ring von als Permanentmagneten ausgebildeten Magnetpole trägt. Dieser Ring von Permanentmagneten besteht dabei aus einer größeren Anzahl von bezüglich ihrer Abmessung als auch ihrer verbleibenden Magnetisierung gleichartigen Permanentmagneten. Die einzelnen Permanentmagnete werden zum Beispiel zu einem Ring (mit konstantem Radius), dessen Mittelpunkt auf der Drehachse liegt, angeordnet, wodurch sich bevorzugt eine Anordnung einzelner Ringsektoren mit gleicher Länge ergibt. Besitzen die einzelnen Permanentmagnete auch eine gleiche Magnetisierung. so ist auch der Verlauf der Magnetfeldlinien im Bereich der einzelnen Sektoren mindestens annähernd gleich. Die Anordnung ist dabei so gewählt, dass sich eine alternierende Polarisierung, also in Umfangsrichtung (bezogen auf die Drehachse der Rotorscheibe) eine abwechselnde Magnetpolanordnung ergibt.

Es ist möglich, dass die jeweiligen Magnetpole als gleichgroße oder auch ungleichgroße Ringsegmente ausgebildet sind. Insbesondere, wenn die Ringsegmente ungleich sind, ist dadurch in geeigneter Weise das magnetische System entsprechend beeinflussbar. Neben der Ausgestaltung der Magnetpole als Teile eines Ringsegmentes mit einem an sich konstanten inneren und äußeren Radius ist es aber auch möglich, die Ausgestaltung der Magnetpole zu variieren. So ist vorgesehen, dass der Magnetpol von bezüglich der Drehachse innen beziehungsweise außen liegenden, im wesentlichen in Umlaufrichtung verlaufenden Magnetpolbegrenzungskanten begrenzt ist, sowie dass die Magnetpolbegrenzungskanten durch Magnetpolgrenzkanten verbunden sind. Dabei ist es möglich, dass zumindest eine (gegebenenfalls auch beide) Magnetpolbegrenzungskante spiralförmig verläuft. Der Begriff spiralförmig ist dabei wie oben beschrieben zu verstehen. Gegebenenfalls ist zum Beispiel auch eine sichelartige Ausgestaltung der Polflächen denkbar.

Hierzu ist es günstig und vorteilhaft, wenn die Magnetpolgrenzkante bezüglich der Drehachse radial, im wesentlichen radial oder zur (bezogen auf die Drehachse) Radialen geneigt beziehungsweise schräg oder spiralförmig beziehungsweise geschwungen verläuft. Auch hierdurch wird erreicht, dass die magnetischen Eigenschaften, insbesondere die Anteile von unterschiedlichen Polaritäten entsprechend variiert werden was für die Ausführung eines rückstellenden Drehmomentes günstig ist.

Der erfindungsgemäße Vorschlag umfasst Lösungen, bei welchen die einzelnen Magnetpole dicht an dicht aneinander angeordnet sind, oder zueinander beabstandet sind.

In einem weiteren, vorteilhaften Vorschlag ist vorgesehen, dass das Material für den Permanentmagneten des Magnetpoles derart ausgebildet ist, dass dessen Remanenz in Abhängigkeit des Drehwinkels des Rotors veränderlich ist. In einer weiteren Variante zur Realisierung des erfindungsgemäßen Prinzips wird gezielt die magnetische Eigenschaft des Materials des im Magnet verbindenden Permanentmagneten multipliziert. Auch hierdurch ist es möglich, eine Inhomogenität im magnetischen System zu erreichen, was zur Ausbildung eines rückstellenden Drehmomentes dient.

Erfindungsgemäß entspricht die Länge der inneren, zweiten Polteilfläche im wesentlichen dem Radius des Ringes von Magnetpolen/Permanentmagneten. Es wurde bereits beschrieben, dass durch die Anordnung der Polteilflächen, insbesondere der inneren Polteilfläche, eine heterogene Verteilung der ansonsten homogen, punkt- oder rotationssymmetrischen Magnetfeldlinienverteilung einer Strom durchflossenen Spule resultiert. In dem erfindungsgemäßen Vorschlag, die Länge der zweiten (inneren) Polteilfläche im wesentlichen dem Radius des Ringes von Permanentmagneten anzunähern, erfolgt eine Konzentration der aus der Spule austretenden Magnetfeldlinien im radialen Bereich der Permanentmagnete und daher eine entsprechende Kraftentfaltung. Dabei ist es günstig, dass die (zweite) Polteilfläche bevorzugt längserstreckend, rechteckartig ausgebildet ist. Unter einer rechteckartigen Ausgestaltung
wird insbesondere eine Kontur verstanden, wie sie insbesondere in Fig. 2a gezeigt ist.

In einer bevorzugten Ausgestaltung ist vorgesehen, dass die jeweilige Flächensumme der Oberflächenteile der dem Luftspalt zugewandten Magnetpole mit jeweils gleicher Polarität, wobei die Oberflächenteile dadurch angegeben sind, dass diese in Richtungen der Drehachse gesehen, auf den Polteilflächen liegen, in Abhängigkeit des Drehwinkels des Rotors veränderlich ist. Hierdurch wird beschrieben, dass die Oberflächenteile des Magnetpoles, die den Polteilflächen in Richtung der Drehachse gesehen gegenüberliegen, also nicht über einem Polspalt positioniert sind nicht entlang der gesamten Drehbewegung des Rotors gleich ist, sondern unterschiedlich sind. Dabei sind die jeweiligen Oberflächenteile gleicher Polarität zu einer Flächensumme aufzuaddieren. Aufgrund der heterogenen Ausgestaltung entweder der Magnetpole oder aber der Polteilflächen ist die Flächensumme längs des Drehwinkels beziehungsweise in Umfangsrichtung gesehen nicht konstant, sondern veränderlich. Dieser Umstand gilt dabei für beide Polaritäten, das heißt den beiden an den Permanentmagneten/Magnetpolen bestehenden Nordbeziehungsweise Südpolen.

Des Weiteren ist vorgesehen, dass die jeweiligen Flächensummen der Oberflächenteile mit jeweils gleicher Polarität unterschiedlich groß sind. Hierbei wird die Flächensumme der Oberflächenteile der Magnetpole mit jeweils gleicher Polarität, bei welchen die Oberflächenteile in Richtung der Drehachse gesehen, auf den Polteilflächen liegen (aufaddiert). Diese Flächensumme wird sowohl für die Nord- wie auch die Südpole bestimmt. Da diese Flächensummen jeweils unterschiedlich groß sind, also unausgeglichen sind, ergibt ein gewisser Anteil der Magnetfeldlinien eine Magnetkraft, die zu einem rückstellenden Moment des Rotors in der Drehachse führt, wenn der Stromfluss durch die Wicklungen der Spule des Drehmagneten abgeschaltet ist.

Des Weiteren ist es für die Ausbildung eines den Rotor zurückstellenden Drehmomentes günstig, dass die Differenz der jeweiligen Flächensumme der Oberflächenteile mit jeweils gleicher Polarität in Abhängigkeit des Drehwinkels des Rotors veränderlich ist. Ausgehend von der vollausgedrehten Position des Rotors, welche nach entsprechender Strombeaufschlagung auf die Magnetspule stattgefunden hat, ergibt sich eine maximale Differenz der jeweiligen Flächensumme der Oberflächenteile gleicher Polarität. Mit abnehmendem Auslenk- oder Drehwinkel (die Ausgangslage bei Strombeaufschlagung ist der Startwinkel α = 0)reduziert sich bevorzugt auch diese Differenz, gleichwohl ist sie aber abhängig von dem Drehwinkel des Rotors. Aus diesem relativ großen Ungleichgewicht im Startpunkt der Rückstellbewegung ergibt sich eine Magnetkraft in Drehrichtung, die die Ausbildung des rückstellenden Drehmomentes begünstigt.

Neben diesem Effekt besteht noch ein weiterer Effekt, nämlich der, dass sich durch eine radial verlaufende Begrenzungskante ebenfalls eine, das Drehmoment unterstützende Magnetkraft ergibt. Diese ist abgeleitet von den Bereichen der Oberfläche des Magnetpoles, der in Richtung der Drehachse gesehen, nicht auf einer Polteilfläche liegt. Auch hier ist zu beachten, dass der magnetische Fluss immer den Weg des geringsten magnetischen Widerstandes wählt und somit den Weg mit dem kleinsten Luftspalt zu den einzelnen Polteilflächen. Hieraus resultiert eine an sich konstante Kraft in Drehrichtung und somit ein konstanter Anteil des rückstellenden Drehmomentes.

In diesem Zusammenhang ist insbesondere zu beachten, dass die Variation in dem magnetischen System in Umfangrichtung gesehen beziehungsweise in Richtung des Drehwinkels sowohl in der Ausgestaltung der Polteilflächen wie auch in der Ausgestaltung der Magnetpole erfolgen kann. Der Trick liegt insbesondere darin, dass die Anteile der Flächensummen der Oberflächenteile mit gleicher Polarität jeweils unterschiedlich sind und somit eine resultierende Magnetkraft aus einem gewissen Anteil der Magnetfeldlinien in Rückstellrichtung besteht.

Für die Ausgestaltung des Luftspaltes, welcher sich zwischen der Rotorscheibe beziehungsweise den Magnetpolen einerseits und der Polfläche beziehungsweise Polteilflächen andererseits ergibt, gibt es mehrere Varianten. Zunächst ist vorgesehen, dass der Luftspalt in axialer Richtung (bezogen auf die Drehachse) zwischen der Polfläche und der Rotorscheibe entlang der Polfläche überall gleich ist und eine entsprechende Inhomogenität in dem magnetischen System durch die Ausgestaltung der Polfläche beziehungsweise Polteilfläche einerseits und/oder dem Magnetpol beziehungsweise den Oberflächenteilen) der Magnetpole andererseits realisiert wird. Zumindest ist es auch möglich, dass die Polteilflächen zueinander jeweils koplanar ausgerichtet sind. Diese Parameter können aber auch variiert werden, um den erfindungsgemäßen Effekt zu erreichen. Es ist zum Beispiel möglich, dass die einzelnen Polteilflächen bezüglich der Drehachse axial etwas versetzt, also nicht koplanar angeordnet sind oder aber der Luftspalt in Umlaufrichtung gesehen nicht konstant sondern veränderlich ist.

Durch eine geschickte Dimensionierung des Luftspaltes zwischen der Polfläche und der Rotorscheibe und des Polspaltes zwischen den einzelnen Polteilflächen, wird das Verhalten des Drehmagnetes charakterisiert beziehungsweise optimiert. So wird zum Beispiel vorgeschlagen, dass der Luftspalt in axialer Richtung, bezogen auf die Drehachse, zwischen der Polfläche und der Rotorscheibe geringer ist als der Polspalt. Durch eine solche Ausgestaltung "zwingt" man die an der Polteilfläche austretenden Magnetfeldlinien primär in das Material der Rotorscheibe einzudringen und über diesen den magnetischen Schluss zur anderen Polteilfläche zu suchen. Bei einer geschickten Dimensionierung der Abstände wie beschrieben, wird dieses Verhalten gesteuert.

Dabei ist insbesondere gefunden worden, dass es noch günstiger ist, die Summen der Breite des Luftspaltes und der Dicke des Ringes von Permanentmagneten geringer zu wählen, als die Größe des Polspaltes.

Eine weitere Variante sieht vor, dass die gesamte Polfläche koplanar ist, das heißt, auf der Polfläche keine der Rotorscheibe zugewandten Erhebungen oder erhabenen Sektoren und so weiter vorgesehen sind. Dadurch wird eine in axialer Richtung optimierte kurze Bauform realisiert.

Alternativ ist vorgesehen, dass die Breite des Luftspaltes in Abhängigkeit des Drehwinkels des Rotors veränderlich ist. Hierdurch ist es möglich, das magnetische System zur Bildung eines rückstellenden Drehmomentes entsprechend zu variieren wird. Dies kann zum Beispiel dadurch realisiert werden, dass zumindest eine Polteilfläche oder auch mehrere beziehungsweise alle Polteilflächen derart zu einer zur Drehachse senkrecht stehenden Bezugsebene geneigt oder gewölbt beziehungsweise gekippt wird/werden, dass sich die Breite des Luftspaltes in Abhängigkeit des Drehwinkels des Rotors verändert.

Da der Luftspalt einerseits durch die Polfläche beziehungsweise Polteilflächen, andererseits durch die Rotorscheibe beziehungsweise die Magnetpole begrenzt ist, ist es auch möglich, dass zumindest eine Oberfläche eines Magnetpoles derart zu einer zur Drehachse senkrecht stehenden Bezugsebene geneigt, gekippt oder gewölbt ist, wodurch sich ebenfalls eine Variation der Breite des Luftspaltes in Abhängigkeit des Drehwinkels des Rotors ergibt.

Bevorzugt schließt sich auf der der Spule abgewandten Seite an der Rotorscheibe eine, insbesondere magnetisch gering wirksame oder magnetisch unwirksame Abdeckscheibe an. Als Material für die Abdeckscheibe bietet sich hierbei zum Beispiel Edelstahl (V2Al, Aluminium oder auch ein Kunststoff oder Verbundwerkstoff an. Eine geringe magnetische Wirksamkeit ist für den erfinderischen Effekt unschädlich, weil die hieraus resultierenden Verluststreuungen den erfindungsgemäßen Effekt nicht verhindern.

Es ist eine bezüglich der Drehachse koaxiale Anordnung der Spule vorgesehen. Die Spule, die bevorzugt als zylinderförmige Spule (mit einem kreisrunden Querschnitt) ausgebildet ist, ist bezüglich ihrer Länge- oder Mittelachse koaxial zur Drehachse orientiert, das heißt, die Längsachse der Spule führt zusammen mit der Drehachse des Rotors. Auch der Einsatz eines Spulenkörpers oder einer Spule, die eine elliptische Grundfläche oder einen elliptischen Querschnitt aufweist, ist möglich. Der Vorteil einer solchen Ausgestaltung liegt darin, dass hier bereits tendenziell eine heterogene Magnetfeldverteilung im Inneren der Spule besteht, ein elliptischer Spulenkörper in herkömmlicherweise mit den Wicklungen belegbar ist und auch hier eine Anordnung möglich ist, bei welcher die Drehachse innerhalb des elliptischen Spulenkörpers verläuft also sehr platzsparend verbaubar ist.

Es ist klar, dass der Vorschlag somit nicht nur auf verhältnismäßig einfache, regelmäßige Spulenkörper beschränkt ist. Es können zum Beispiel Spulen oder Spulenkörper eingesetzt werden, die so realisiert sind, dass die darauf aufgebrachten Wicklungen hernach die Drehachse umschließen und zum Beispiel immer noch in einfacher Weise herstellbar sind, auch wenn ihre Spulenkörper selber verhältnismäßig komplex (mehreckig, polygonal oder ähnliches) sind.

In der Zeichnung ist die Erfindung insbesondere in einem Ausführungsbeispiel schematisch dargestellt. Es zeigen:
- Fig. 1:: einen Schnitt durch einen erfindungsgemäßen Drehmagneten;
- Fig. 2a:: eine Draufsicht auf den erfindungsgemäßen Drehmagneten, entsprechend der Schnittlinie IIa-IIa in Fig. 1 mit demontiertem Rotor;
- Fig. 2b, 2c, 2e: je im der Draufsicht (ähnlich wie Fig. 2a) den erfindungsgemäßen Drehmagneten jeweils in der Endstellung, nach der Rückdrehbewegung des Rotors, mit die Polfläche verdeckende Rotorscheibe mit Magnetpolen
- Fig. 2d:: in einer Draufsicht den erfindungsgemäßen Drehmagneten in der Anfangsstellung [START] die zur der Endstellung [ENDE] nach Fig. 2e führt
- Fig. 3: das rückstellende Drehmoment als Funktion des Drehwinkels, α beziehungsweise Auslenkwinkel gemäß der Erfindung
- Fig. 4:: eine Draufsicht auf ein Beispiel des Drehmagneten, nicht Teil der beanspruchten Erfindung, mit demontiertem Rotor, ähnlich der Ansicht nach Fig. 2a

In den Figuren sind gleiche oder einander entsprechende Elemente jeweils mit den gleichen Bezugszeichen bezeichnet und werden daher, sofern nicht zweckmäßig, nicht erneut beschrieben.

Der erfindungsgemäße Drehmagnet 1 ist in Fig. 1 in der Schnittdarstellung schematisch dargestellt. Der Drehmagnet 1 besteht im wesentlichen aus einem Stator 3 und einem Rotor 5. Der Stator 3 nimmt die Spule 4 auf, der Rotor 5 dreht um die Drehachse 51.

In dem hier gezeigten Ausführungsbeispiel besteht der Stator 3 aus zwei Teilen, nämlich dem Mantelteil 35 und dem Deckelteil 36. Der Mantelteil 35 ist topfartig ausgestaltet und nimmt die Spule 4 auf. Gleichzeitig wirkt insbesondere das Mantelteil 35 als Gehäuse und schließt den Drehmagneten ab.

Die äußere Form des Mantelteils 35 ist dabei topfartig, wobei konzentrisch ein Mittelpol 34 dornartig vorgesehen ist, auf welchen der Spulenkörper 4l der Spule 4 aufsetzbar ist. Auf der Innenseite des Mittelpols 34 sind bezüglich der Drehachse Sl voneinander etwas beabstandet zwei Drehlager 55 vorgesehen, welche die Rotorwelle 50 des Rotors 5 im Stator radial abstützen. In axialer Richtung gesehen steht der Mittelpol 34 in Richtung des Deckelteiles 36 über das Ende der Spule 4 hervor. Er bildet so eine dornartige Aufsetzmöglichkeit, der Mittelpol 34 ist koaxial zur Drehachse 51 angeordnet.

Die Spule 4 ist gebildet aus einem im wesentlichen zylinderförmigen Spulenkörper 41, der die Wicklungen 42 trägt. Die Wicklungen 42 bestehen aus einem stromleitenden Draht, Die Wicklungen sitzen auf dem Spulenkörper 41, der Spulenkörper 41 und somit auch die Wicklungen 42 sind in dem Stator 3 so angeordnet, dass sie die Drehachse Sl umschließen.

Auf der dem Deckelteil 36 abgewandten Seite des Stators 3, im Bodenbereich 302, ist ein Durchbruch für das Anschlußkabel 43 der Wicklung 42 vorgesehen.

In dem hier gezeigten Ausführungsbeispiel ist in dem Stator 3 nur eine Spule 4 vorgesehen, ohne aber die Erfindung hierauf beschränken zu wollen. Erfindungsgemäß ist es möglich, auch mehrere Spulen 4 bezüglich der Drehachse 51 axial hintereinander jeweils koaxial zu der Drehachse 51 anzuordnen.

Der Stator 3 ist dann entsprechend länger ausgestaltet.

Der mehrteilige Aufbau des Stators 3, aufgeteilt in ein Mantelteil 35 und ein Deckelteil 36 erleichtert erheblich die Montage des erfindungsgemäßen Drehmagneten 1. Bei einem abgenommenen Deckelteil 36 ist es möglich, die Spule 4 im Mantelteil 35 einzubauen, insbesondere auf dem Mittelpol 34 aufzustecken. Der Mittelpol 34 ist hülsenartig ausgebildet und innen hohl, um die Rotorwelle 50 aufzunehmen. In dem Mittelpol 34 ist auch ein Drehlager 55 eingeschoben und gegebenenfalls eingepresst, hierzu ist ein entsprechender Kragen im Mittelpol 34 vorgesehen.

Das Deckelteil 36 wird in axialer Richtung (bezogen auf die Drehachse 51) auf das Mantelteil 35 aufgeschoben und mit diesem verpresst. In dem hier gezeigten Ausführungsbeispiel des erfindungsgemäßen Drehmagneten bildet ein nach innen verstehender Kragen 303 des Deckelteils 36 die Polfläche 30 beziehungsweise einen Teil der Polfläche 30, beziehungsweise die Polteilfläche 31.

Der Stator 3 dient zur Führung des Magnetfeldes, welches von der Spule 4 erzeugt wird, wenn die von der Spule 4 getragenen Wicklungen 42 mit elektrischem Strom beaufschlagt werden. Die Verbindung zwischen dem Mantelteil 35 und dem Deckelteil 36 ist so ausgestaltet, dass eine Leitung des magnetischen Flusses möglichst nicht behindert wird.

Das Deckelteil 36 hat auch die Aufgabe, eine Befestigungsmöglichkeit des erfindunsgemäßen Drehmagneten 1 zur Verfügung zu stellen. Hierzu ist ein bevorzugt beidseitig vorstehender Befestigungsflansch 38 am Deckelteil 36 ausgeformt, welcher Befestigungsöffnung 39 besitzt, durch welche entsprechende Befestigungsschrauben (nicht gezeigt) durchführbar sind.

Der Rotor 5 besitzt eine Rotorwelle 50, die ca. 1,5 bis 3 mal, bevorzugt ca. 1,8 bis 2,2 mal länger ist als die Länge des Stators 3. Mittig trägt die Rotorwelle 50 die Rotorscheibe 52. An diese schließt sich, in Fig. 1 links gezeigt, der Bereich der Rotorwelle 50 an, der in den Stator einsteht und in den beide Drehlager 55 gelagert sind.

An dem nach außen, über den Stator 3 hervorstehenden Teil (in Fig. 1 rechts dargestellt) der Rotorwelle 50 sind entsprechend Elemente anschließbar, die aufgrund der Drehbewegung des Drehmagneten 1 zu steuern sind. Hierzu durchdringt die Rotorwelle 50 eine Abdeckscheibe 300, die die Rotorscheibe 52 verdeckt.

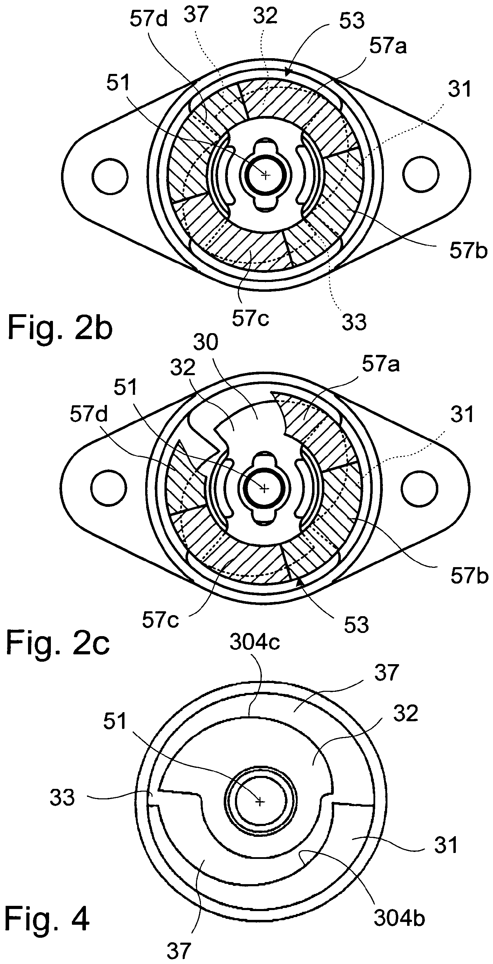

In dem hier gezeigten Ausführungsbeispiel trägt die Rotorscheibe 52 einen Ring 53 (Fig. 2b) von Magnetpolen 57a Permanentmagneten, deren Polanordnung aber so gewählt ist, dass sie in Umfangsrichtung 10, (bezogen auf die Rotation der Drehachse, um die Drehachse 51) abwechselnd, also alternierend ist.

Aufgrund des Stromflusses durch die Wicklungen 42 der Spule 4 erfolgt eine Verdrehung oder Auslenkung der Rotorwelle 50 um die Drehachse 51 um einen Auslenk- oder Drehwinkel α. Die Wortwahl Drehwinkel oder Auslenkwinkel ist gleichwertig.

Das magnetische System des Drehmagneten 1 ist insbesondere durch die Polteilflächen 31,32 der Polfläche 30, der Magnetpole 57a, 57b, 57c, 57d und den zwischen diesen beiden Elementen, im wesentlichen axial sich erstreckenden Luftspalt 54 angegeben. Dabei ist zu beachten, dass der Magnetpol 57 durch dessen Oberfläche 59 den Luftspalt 54 begrenzt.

In Fig. 2a ist eine Draufsicht in den erfindungsgemäßen Drehmagneten 1 mit abgenommenem Rotor 5 gezeigt.

Die Polfläche 30 ist in dem hier gezeigten Ausführungsbeispiel aufgeteilt in zwei Polteilflächen 31, 32. Die innere Polteilfläche 32 ist auf dem Mittelpol 34 des Stators 3 aufgebaut und wird von einer äußeren Begrenzungskante 304c (oben) und 304d (unten) in Umfangsrichtung 10 begrenzt. In dem hier gezeigten Ausführungsbeispiel wird die (innere) Polteilfläche 32 zumindest teilweise umschlossen von zwei einander gegenüberliegenden äußeren Polteilflächen 31.

Die Wirkung der Anordnung dieser Polteilflächen 31, 32 ist nun jene, dass die wohlbekannte punkt- oder rotationssymmetrische Feldlinienverteilung bei einer Magnetspule bei Ausgestaltung der einzelnen Polteilflächen 31, 32 verzerrt wird. Die Polteilflächen dienen der Führung in den Magnetfeldlinien. Mit N bzw. S sind die Magnetpole des durch die Spule erzeugten Magnetfeldes angegeben. Dabei ist es günstig, dass zwischen der Polteilfläche 32, die auch die Drehachse 51 umschließt, und den seitlich beabstandeten Polteilflächen 31, 31a, 31b ein Polspalt 33 besteht. Alternativ ist der Polspalt 33 verfüllt oder unverfüllt. Für die Magnetfeldlinien stellt dieser Polspalt 33 einen entsprechenden Widerstand dar.

In Umfangsrichtung, bezogen auf die Drehachse 51 gesehen, bildet sich somit auf der Polfläche 30 eine abwechselnde Anordnung von Nord- (N) bzw. Südpolen (S) aus.

Konstruktiv ist die Anordnung so gelöst, dass das Deckelteil 36 eine Ausnehmung 37 aufweist, in welche die innere, zweite Polteilfläche 32 einsetzbar ist. Genaugenommen wird dabei die innere, zweite Polteilfläche 32 auf das dornartige Ende des Mittelpoles 34 aufgesetzt, aufgedrückt oder aufgepresst. Neben einem guten mechanischen Sitz erfährt somit die Polteilfläche 32 auch einen guten magnetischen Kontakt zu dem übrigen Mittelpol 34.

Die Anordnung ist dabei so gewählt, dass die der Rotorscheibe 52 zugewandte Oberfläche der Polteilfläche 31, 32 zueinander koaxial sind, also der Abstand von der in mehrere Polteilflächen 31, 32 aufgeteilten Polfläche 30 zur Rotorscheibe 52 gleichgroß ist, weswegen sich ein Luftspalt 54, konstanter Breite zwischen der Polfläche 30 und der Rotorscheibe dem auf der Rotorscheibe 52 angeordneten Ring 53 von Permanentmagneten gleicher Ausdehnung ergibt.

Wie in Fig. 2a gut zu sehen, erstreckt sich der Polspalt 33 in radialer Richtung (bezogen auf die Drehachse 51). Der Polspalt 33 befindet sich dabei, in Umfangsrichtung gesehen, zwischen der ersten Polteilfläche 31 und der zweiten Polteilfläche 32.

Die Ausgestaltung der zweiten, inneren Polteilfläche 32, ist drehankerähnlich, allerdings etwas verzerrt in Draufsicht gesehen, auch viereck- oder parallelogrammartig, wobei die Polteilfläche 32 in drei Bereichen zu unterscheiden ist. In einem mittleren Bereich, der eine Öffnung für das Durchführen der Rotorwelle 50 aufweist, wird die Polteilfläche 32 von einem zur Drehachse 51 konzentrischen Kreisbogensegment beschränkt.

Die beiden einander gegenüberliegenden, äußeren Bereiche, die an den Mittelbereich anschließen, sind ungefähr gleichgroß und etwas, zur Erzeugung einer Inhomogenität im magnetischen System, in Richtung 10 des Uhrzeigers verzerrt.

An die obenliegende Begrenzungskante 304c sowie die unten liegende Begrenzungskante 304d schließen sich im Uhrzeigersinn gesehen (an der oberen Begrenzungskante 304c) zunächst eine kürzere, erste Grenzkante 305c und nachfolgend eine längere, zweite Grenzkante 305d an, die im wesentlichen radial orientiert ist, ohne dabei die Ausgestaltung hierauf festzulegen.

Da die beiden Grenzkanten 305c, 305d eine unterschiedliche radiale beziehungsweise ungefähr in radialer Richtung verlaufende Länge haben, ergibt es sich, dass die gesamte Begrenzungskante 304c, 304d nicht äquidistant zur Drehachse 51 verläuft, sondern die einzelnen Punkte unterschiedliche Abstände zur Drehachse 51 aufweisen, also sichel- oder spiralförmig im Uhrzeigersinn gesehen von innen nach außen geführt werden.

Auch die außenliegende Polteilfläche 31 weist Begrenzungskanten 304a, 304b beziehungsweise Grenzkanten 305a, 305b auf, die zu einer speziellen Verteilung der Magnetfeldlinien bei einem ausgelenkten Rotor führen. Die Grenzkanten 305a, 305b sind verhältnismäßig kurz. Deren Länge beträgt nur ca. 5% bis 50%, bevorzugt ca. 8% bis 20% der Länge der Begrenzungskante 304a, 304b oder 5% bis 50%, bevorzugt 10% bis 40% des Außenradius des Ringes 53 der Magnetpole 57. Die Grenzkante 305b ist gewölbt ausgeführt und insbesondere nicht in radialer Richtung ausgerichtet, sondern hierzu schräg angeordnet, wobei eine die Grenzkante 305b beschreibende Gerade mit einer Radialen ca. einen Winkel von 50° bis 80° ca. 60° einschließt.

In Fig. 4 ist als Beispiel, nicht Teil der beanspruchten Erfindung, eine alternative Ausgestaltung der Polfläche 30 gezeigt. Vergleicht man die Ausgestaltung nach Fig. 4 mit der Variante nach Fig. 2a, so zeigt sich, dass anstelle von zwei äußeren Polteilflächen 31, zwischen welchen die innere Polteilfläche 32 (Fig. 2a) angeordnet ist, bei Fig. 4 nur je eine innere Polteilfläche 32 und eine äußere Polteilfläche 31 vorgesehen sind. Die Anordnung ist dabei so gewählt, dass die Polfläche in zwei annähernd gleichgroße Hälfte aufgeteilt ist und jede Hälfte einen übrigen Teil einer Polteilfläche aufnimmt. So erstreckt sich die innere Polteilfläche 32 im oberen Bereich der Polfläche, die äußere Polteilfläche 31 erstreckt sich im unteren Bereich der Polfläche, bezogen auf die Drehachse 51.

Aus Befestigungs-/Stabilitätsgründen ragt ein Haltring der Polteilfläche 32 in die untere Hälfte, in welcher überwiegend die äußere Polteilfläche 31 angeordnet ist. In Uhrzeigerichtung gesehen, ist der Verlauf der äußeren Begrenzungskante 304c der inneren Polteilfläche 32 spiralförmig, von Außen nach Innen, wohingehend der Verlauf der innenliegenden Begrenzungskante 304b der äußeren Polteilfläche 31 (in Uhrzeigerichtung gesehen) spiralförmig, von Innen nach Außen ist. Dabei ist die Anordnung so gewählt, dass zumindest ein Teil der Punkte der innenliegenden Begrenzungskante 304b der ersten Polteilfläche 31 einen geringeren Abstand zur Drehachse 51 aufweist, wie zumindest ein Teil der Punkte der außenliegenden Bezugskante 304c der zweiten Polteilfläche 32. Durch die vorgeschlagene Ausgestaltung wird über einen relativ großen Rückstellwinkelbereich (130°, 160° oder gar 180°) eine Rückstellmöglichkeit realisiert. Der besondere Verlauf der Bezugskanten ergibt zum Beispiel im Zusammenhang mit einem als Ringsegment ausgestalteten Magnetpol entsprechende vorteilhafte Reaktionen bei den sich bildenden, rückstellenden Drehmoments. Natürlich ist es möglich, eine ähnliche Geometrie auch oder nur bei der Ausgestaltung der Magnetpole einzusetzen.

Die Anordnung ist so, dass die außenliegende Begrenzungskante 304c mit bezüglich der Drehachse 51 konstanten Radius ausgebildet ist. Die innenliegende Begrenzungskante 304b ist im Uhrzeigersinn gesehen zunächst von einem größeren Radius zu einem kleineren Radius geführt derart, dass sich die in Umfangsrichtung 10 (in Uhrzeigerichtung gesehen) die effektive Breite b (radial gemessen) und zwar über einen Winkelbereich von mehr als 1°, bevorzugt mehr als 5°, insbesondere mehr als 10° sich vergrößert. Insgesamt sind die Flächenanteile der beiden Polteilflächen 31, 32, insbesondere unterhalb des Ringes 53 ungleich, wodurch sich ein gewisser Anteil der Magnetfeldlinien ergibt, deren Magnetkraft ein resultierendes Drehmoment erzeugen.

Die Anordnung ist so gewählt, dass sich die äußere Polteilfläche 31 über einen Winkelbereich (um die Drehachse 51) von ca. 90° erstreckt. Es ist klar, dass nicht nur zwei äußere Polteilflächen 31 angeordnet sein können, wie in Fig. 2a gezeigt, sondern die Anzahl variabel bestimmbar und auch größer sein kann. Zum Beispiel ist auch die innere Polteilfläche 32 sternförmig ausbildbar, deren Strahlen zwischen die äußeren, einzelnen Polteilflächen 31 ragen. Es ist möglich, auch nur eine äußere Polteilfläche 31 vorzusehen, wie dies zum Beispiel auch in Fig. 4 gezeigt ist (Beispiel, nicht Teil der beanspruchten Erfindung). Die äußere Polteilfläche 31 kann dabei einen Winkelbereich von mindestens 10° bis zum Beispiel 180°, bevorzugt von 15° bis 120° aufweisen, wobei die jeweilige Länge der Polteilflächen nicht gleichgroß sein muss, sie kann auch unterschiedlich sein.

Die in Fig. 2a gezeigte innere Polteilfläche 32 besitzt ein Winkelsegment von zwei mal je ca. 78°, das beidseitig der Drehachse 51 angeordnet ist.

In dem hier gezeigten Ausführungsbeispiel beträgt der Polspalt 33 ca. 12°, auch dieser kann entsprechend größer oder kleiner gewählt werden und zum Beispiel in einem Intervall von 5° bis 25°, bevorzugt von 8° bis 14° liegen.

Fig. 2b und Fig. 2c zeigen zusätzliche Ansichten, die insbesondere zur Erleichterung der gewählten Ansicht dienen sollen.

So zeigt Fig. 2c insbesondere den Ring 53, mit den verschiedenen Magnetpolen 57a, 57b, 57c, 57d teilaufgebrochen derart, dass man die von dem Ring 53 ansonsten verdeckten Polteilfläche 32 und die Ausnehmungen 37 erkennt.

Etwas komplexer ist die Darstellung nach Fig. 2b, bei welcher die tatsächlich von dem Ring 53 mit dem Magnetpolen 57a, 57b, 57c und 57d verdeckten Elemente mit gestrichelten Bezugszeichenlinien ausgeführt sind und so verdeutlichen sollen, dass diese in einer etwas tieferen Lage, mehr im Stator 3 angeordnet, anzusehen sind.

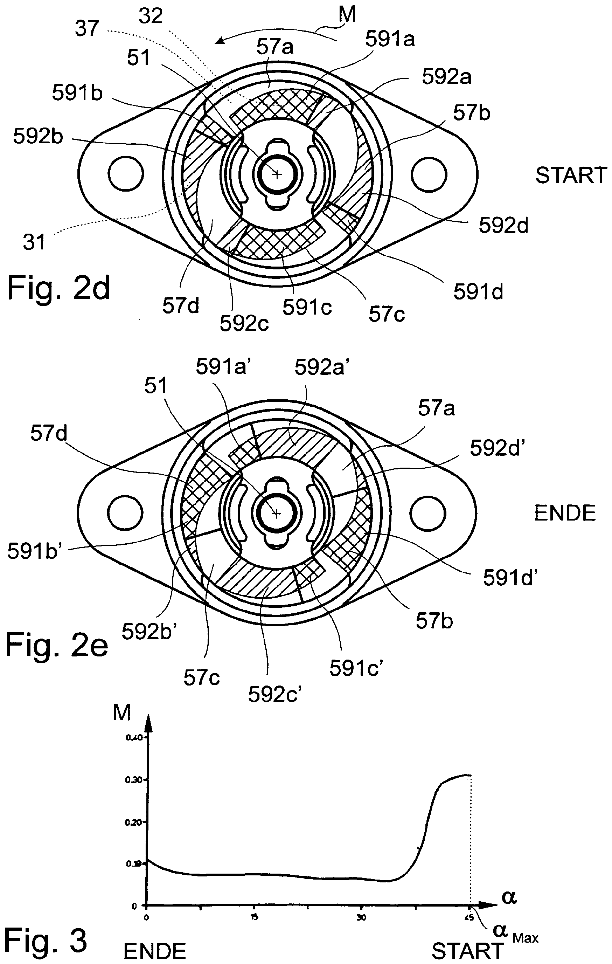

Fig. 2d und Fig. 2e zeigen zwei Stellungen des erfindungsgemäßen Drehmagneten, wobei Fig. 2d die START-Position (α=αMax) zeigt, was dem Zeitpunkt entspricht, bei welchem der Stromfluss durch die Wicklungen der Spule 4 abgeschaltet wird und sich der Rotor in der voll ausgelenkten Winkelstellung befindet. Die Fig. 2e zeigt die Endlage (ENDE) des Rotors, nachdem das resultierende Drehmoment M den Rotor in seine Ausgangslage (α = 0°) zurückgeschwenkt hat.

In Fig. 2d beziehungsweise 2e sind in verschiedenen Schraffurtechniken jeweils gleichartig polarisierte Oberflächenteile 591a, 591b, 591c, 591d beziehungsweise 592a, 592b, 592c und 592d der jeweiligen Magnetpole 57a, 57b, 57c, 57d gezeigt.

Der Einfachheit halber sei angenommen, dass die rautenartig schraffierten Flächen 591a, 591b, 591c und 591d als Südpole (S) polarisiert sind, wohingegen die Oberflächenteile 592a, 592b, 592c und 592d, die nur diagonal schraffiert sind, N polarisiert sein sollen.

Wie sich unschwer aus Fig. 2d ergibt, beschreibt der Oberflächenteil 591a zum Beispiel (exemplarisch für alle anderen Oberflächenteile) den Bereich des Magnetpoles 57a der in Blickrichtung der Drehachse 51, wie also in Fig. 2d gezeigt, exakt auf dem oberen Teil der inneren Polteilfläche 32 liegt.

Der Oberflächenteil 591b ist der Anteil des Magnetpoles 57a, der auf den auf der linken Seite angeordneten, äußeren Polflächenteil 31 ruht.

Die Bereiche der einzelnen Magnetpole 57a, 57b, 57c, 57d, die nicht schraffiert sind, liegen über der offenen Ausnehmung 37.

Der Oberflächenteil 592b beschreibt den Bereich des Magnetpoles 57d, der über dem sichelartigen Restteil der linken Polteilfläche 31 ruht.

Im Uhrzeigersinn an dem Oberflächenteil 591a anschließend befindet sich, nach der Grenze zum nächsten Polfläche 57b die Polteilfläche 592a, die ähnlich wie der Oberflächenteil 592c als N-Pol markiert ist.

Aufgrund der grundsätzlich punktsymmetrischen Ausgestaltung ergeben sich die Verhältnisse für die übrigen Oberflächenteile 591c, 591d, 592d analog.

Zu beachten ist, dass es sich hier bei den Oberflächenteilen 591a, 591b, 591c, 591d beziehungsweise 592a, 592b, 592c, 592d jeweils um die dem Luftspalt 54 zugewandten Teile der Oberfläche 59 der einzelnen Magnetpole 57a, 57b, 57c, 57d handelt.

Addiert man nun die Flächen der einzelnen gleich polarisierten Oberflächenteile zusammen, so ergibt sich in dem in der Fig. 2d gezeigten Bild für die S-polarisierten Oberflächen zum Beispiel ein Wert von 7,828 Flächeneinheiten, für die N-polarisierten Oberflächenteile 592a, 592b, 592c, 592d ein Wert von 6,151 Flächeneinheiten.

Es ist insofern festzuhalten, dass in der (voll)ausgelenkten Stellung nach Fig. 2d ein doch erhebliches Ungleichgewicht der jeweiligen polarisierten Flächensummen ergibt. Die Differenz der N- beziehungsweise S-polarisierten Oberflächenteile beträgt immerhin 1,677 Flächeneinheiten.

In Fig. 2e ist die Endlage bei einem Drehwinkel α = 0° gezeigt. Es ist gut zu sehen, dass die einzelnen Oberflächenteile 591a, 591b, 5910, 591d beziehungsweise 592a, 592b, 592c, 592d zum einen nun an anderer Stelle liegen und zum anderen auch unterschiedliche Größen aufweisen. Dieser Umstand ist durch die Ergänzung eines (') jeweils Rechnung getragen und es ist gut zu erkennen, dass zum Beispiel sich die Oberflächenanteile 591a von Fig. 2d zum Oberflächenanteil 591a' nach Fig. 2e verringert hat, wohingegen sich zum Beispiel der Oberflächenanteil 592c nach Fig. 2d zu 592c' nach Fig. 2e erheblich vergrößert hat.

Addiert man auch hier wiederum die Flächensummen der einzelnen gleich polarisierten Oberflächenteile für die N- beziehungsweise S-polarisierten Flächen auf, so ergibt sich für die S-polarisierten Flächen eine Fläche von 7,191 Flächeneinheiten, für die N-polarisierten Flächen eine Gesamtfläche von 6,884 Flächeneinheiten. Es ist gut zu erkennen, dass die zwischen diesen beiden Drehwinkellagen zum einen die S-polarisierte Fläche verkleinert, die N-polarisierten Flächenanteile vergrößert haben und sich auch die Differenz von N- beziehungsweise S-polarisierten Flächen sich erheblich verringert hat, nämlich auf einen Wert von 0,357 Flächeneinheiten.

Die sich hieraus ergebenden Auswirkungen auf das Rückstellmoment M zeigt eindrucksvoll die Grafik nach Fig. 3. Es ist hier das Rückstellmoment M im unbestromten Zustand gezeigt, wobei der Start der Rückstellbewegung das von einem gewissen Winkel α=αMax ausgelenkten Rotors rechts gezeigt ist, das Ende der Rückstellbewegung ist bei einem Winkel von α = 0° vorgesehen. Die Rückstellbewegung beginnt mit einem verhältnismäßig großen Anfangsdrehmoment, welcher über einen Bereich von circa 5-8° auf verhältnismäßig konstantem Niveau ist, um dann etwas abzusinken. Je weiter der Auslenkwinkel α reduziert wird, sinkt das resultierende Rückstellmoment, allerdings wird dieses nicht 0 sondern verharrt zumindest auf einem Grunddrehmoment, welches ungefähr einem Drittel des anfänglichen Rückstellmomentes entspricht.

Der anfänglich hohe Wert des Rückstellmomentes ergibt sich aufgrund der hohen Asymmetrie der N- beziehungsweise- S-polarisierten Flächen beziehungsweise der hohen Differenzbildung dieser Flächenanteile. Es ist zu betonen, dass sich dieser spezielle Kennlinienverlauf nicht charakteristischerweise bei einem Proportionalmagneten ergibt, sondern in gleicher Weise auch zum Beispiel bei einem Schaltmagneten realisierbar ist. Das anfänglich hohe Rückstellmoment beim START ist insofern günstig, um Adhäsion des Systems schnell und nachhaltig zu überwinden.

Das im wesentlichen konstante Rückstellmoment ergibt sich aus dem Effekt der Bereiche der Oberfläche des Magnetpoles 57, die in Richtung der Drehachse 51 gesehen nicht auf einer Polteilfläche 31,32 liegt.

Dieses Permanentmagnetfeld orientiert sich zur nächsten Grenzkante und erzeugt einen drehwinkelunabhängigen Magnetkraftanteil in längenradialer Richtung (bezogen zur Drehachse 51) was aus diesem konstanten Drehmomentanteil resultiert.

## Patentansprüche

1. Drehmagnet, bestehend aus einem Stator (3) und einem um eine Drehachse (51) drehbaren Rotor (5), wobei der Rotor (5) eine Rotorwelle (50) aufweist, auf welcher eine Rotorscheibe (52) angeordnet ist, und die Rotorscheibe (52) in Umfangsrichtung (10) gesehen alternierend, magnetisch polarisierte Magnetpole (57) aufweist, wobei die einzelnen Magnetpole (57a, 57b, 57c, 57d) zueinander beabstandet sind und der Stator (3) mindestens eine, Wicklungen (42) von elektrischen Strom leitendem Draht tragende Spule (4) aufnimmt, und die Wicklungen (42) die Drehachse (51) umschließen, wobei die Rotorscheibe (52) auf ihrer der Spule (4) zugewandten Seite zumindest einen Ring (53) von als Permanentmagnete ausgebildeten Magnetpolen (57a, 57b, 57c, 57d) trägt, und zwischen der Spule (4) und der Rotorscheibe (52) eine Polfläche (30) vorgesehen ist, die zumindest aus drei, zur Magnetflussführung des von der durch Strombeaufschlagung der Wicklungen (42) der Spule (4) erzeugten Magnetfeldes dienenden Polteilflächen (31, 32) besteht, wobei der Stator (3) einen, die Spule (4) durchdringenden und die zweite, innere Polteilfläche (32) tragenden Mittelpol (34) aufweist und die mit dem Mittelpol (34) verbundene, innere Polteilfläche (32) zwischen zwei äußeren Polteilflächen (31) angeordnet ist, wobei jede Polteilfläche (31, 32) bezüglich der Drehachse (51) zumindest eine innen und/oder außen liegende, im wesentlichen in Umfangsrichtung (10) verlaufende Begrenzungskante (304a, 304b) aufweist, und wobei sich an die im wesentlichen in Umfangsrichtung (10) verlaufende Begrenzungskante (304a, 304b, 304c, 304d) eine im wesentlichen radial verlaufende Grenzkante (305a, 305b, 305c, 305d) anschließt und die Grenzkante (305a, 305b, 305c, 305d) zur Radialen, bezogen auf die Drehachse (51), geneigt, schräg, spiralförmig oder geschwungen verläuft, und die Länge der inneren zweiten Polteilfläche im wesentlichen dem Radius des Ringes (53) von Magnetpolen (57a, 57b, 57c, 57d) entspricht, wodurch an der Polfläche (30) eine, bezogen auf die Drehachse (51) in Umfangsrichtung (10) gesehene, alternierende, magnetische Polarisierung besteht und wobei zwischen der Rotorscheibe (52) und der Polfläche (30) ein Luftspalt (54) vorgesehen ist, wobei die Magnetpole (57) der Rotorscheibe (52), der Luftspalt (54) und die Polteilflächen (31, 32) der Polfläche (30) Elemente (54, 57, 31, 32) des magnetischen Systems des Drehmagneten (1) bilden, und zumindest ein Element (54, 57, 31, 32) des magnetischen Systems entlang der Umfangsrichtung (10), in Abhängigkeit des Drehwinkels (α) des Rotors (5) um die Drehachse (51) derart veränderlich ausgebildet ist, dass sich beim Abschalten des Stroms durch die Wicklungen (42) der Spule (4) ein den Rotor (5) in die Ausgangslage zurückstellendes Drehmoment (M) ergibt.

2. Drehmagnet nach Anspruch 1, **dadurch gekennzeichnet, dass** der Stator (3) einen dornartigen Mittelpol (34) aufweist.

3. Drehmagnet nach einem der vorhergehenden Ansprüche, **dadurch gekennzeichnet, dass** die erste und zweite Polteilfläche (31, 32) unterschiedlich oder gleich groß sind.

4. Drehmagnet nach einem der vorhergehenden Ansprüche, **dadurch gekennzeichnet, dass** zumindest ein Teil von Punkten einer innenliegenden Begrenzungskante (304b) der ersten Polteilfläche (31) einen geringeren Abstand zur Drehachse (51) aufweist, als zumindest ein Teil der Punkte der außenliegenden Begrenzungskante (304c) der zweiten Polteilfläche (32).

5. Drehmagnet nach einem der vorhergehenden Ansprüche, **dadurch gekennzeichnet, dass** auf der Rotorscheibe (52) die Oberflächen (59) der unterschiedlichen Magnetpole (57a, 57b, 57c, 57d) gleich groß oder unterschiedlich groß sind.

6. Drehmagnet nach einem der vorhergehenden Ansprüche, **dadurch gekennzeichnet, dass** der Magnetpol (57a, 57b, 57c, 57d) von bezüglich der Drehachse (51) innen beziehungsweise außen liegenden, im wesentlichen in Umfangsrichtung verlaufenden Magnetpolbegrenzungskanten begrenzt ist sowie die Magnetpolbegrenzungskanten durch Magnetpolgrenzkanten verbunden sind.

7. Drehmagnet nach Anspruch 6, **dadurch gekennzeichnet, dass** zumindest eine Magnetpolbegrenzungskante spiralförmig verläuft.

8. Drehmagnet nach einem der vorhergehenden Ansprüche, **dadurch gekennzeichnet, dass** ein Material für den Permanentmagneten des Magnetpoles (57a, 57b, 57c, 57d) vorgesehen ist, dessen Remanenz in Abhängigkeit des Drehwinkels (α) des Rotors (5) veränderlich ist.

9. Drehmagnet nach einem der vorhergehenden Ansprüche, **dadurch gekennzeichnet, dass** die jeweilige Flächensumme der Oberflächenteile (591a, 591b, 591c, 591d; 592a, 592b, 592c, 592d) der dem Luftspalt (54) zugeordneten Magnetpole mit jeweils gleicher Polarität, wobei die Oberflächenteile dadurch angegeben sind, dass diese in Richtung der Drehachse (51) gesehen auf den Polteilflächen (31,32) liegen, in Abhängigkeit des Drehwinkels (α) des Rotors (5) veränderlich ist.

10. Drehmagnet nach Anspruch 9, **dadurch gekennzeichnet, dass** die jeweiligen Flächensummen der Oberflächenteile (591a, 591b, 591c, 591d; 592a, 592b, 592c, 592d) mit jeweils gleicher Polarität unterschiedlich groß sind.

11. Drehmagnet nach einem der vorhergehenden Ansprüche, **dadurch gekennzeichnet, dass** die Breite des Luftspaltes (54) in Abhängigkeit des Drehwinkels (α) des Rotors (5) veränderlich ist.

12. Drehmagnet nach einem der vorhergehenden Ansprüche, **dadurch gekennzeichnet, dass** die Polteilflächen (31, 32) koplanar sind.

13. Drehmagnet nach einem der Ansprüche 1 bis 11, **dadurch gekennzeichnet, dass** die zumindest eine Polteilfläche (31, 32) derart zu einer zur Drehachse (51) senkrecht stehenden Bezugsebene geneigt oder gewölbt ist, dass sich die Breite des Luftspaltes in Abhängigkeit des Drehwinkels (α) des Rotors (5) verändert.

14. Drehmagnet nach Anspruch 13, **dadurch gekennzeichnet, dass** zumindest eine Oberfläche eines Magnetpoles (57a, 57b, 57c, 57d) derart zu einer zur Drehachse (51) senkrecht stehenden Bezugsebene geneigt oder gewölbt ist, dass sich die Breite des Luftspaltes in Abhängigkeit des Drehwinkels (α) des Rotors (5) verändert.

## Claims

1. Rotating magnet consisting of a stator (3) and a rotor (5) that can rotate around a rotational axle (51), wherein the rotor (5) has a rotor shaft (50) a rotor disc (52) being arranged thereon, and the rotor disc (52), seen in the direction of the circumference (10), has alternating, magnetically polarized magnetic poles (57), wherein the individual magnetic poles (57a, 57b, 57c, 57b) are spaced from each other, and the stator (3) receives at least one coil (4) that carries windings (42) of electrically conducting wire, and the windings (42) encircle the rotational axle (51), wherein the rotor disc (52) carries on its side facing the coil (4) at least one ring (53) of magnetic poles (57a, 57b, 57c, 57d) configured as permanent magnets, and between the coil (4) and the rotor disc (52) a pole face (30) is provided consisting of at least three partial pole faces (31, 32) serving for guiding the magnetic flow of the magnetic field generated by electrifying the windings (42) of the coil (4), wherein the stator (3) has a center pole (34) penetrating the coil (4) and carrying the second inner partial pole face (32), and the inner partial pole face (32) connected with the center pole (34) is arranged between two outer partial pole faces (31), wherein each partial pole face (31, 32) has at least one boundary edge (304a, 304b) extending essentially in the direction of the circumference (10) and positioned with respect to the rotational axle (51) inside and/or outside, and wherein an essentially radially extending border edge (305a, 305b, 305c, 305d) is connected to the boundary edge (304a, 304b, 304c, 304d) extending essentially in the direction of the circumference (10), and the border edge (305a, 305b, 305c, 305d) has an inclined, slanting, spiral or curved shape to the radial shape with respect to the rotational axle (51), and the length of the inner, second partial pole face essentially corresponds with the radius of the ring (53) of magnetic poles (57a, 57b, 57c, 57d), so that at the pole face (30) the magnetic polarization is alternating seen with respect to the rotational axle (51) in the direction of the circumference (10), and wherein between the rotor disc (52) and the pole face (30) an air gap (54) is provided, wherein the magnetic poles (57) of the rotor disc (52), the air gap (54) and the partial pole faces (31, 32) of the pole face (30) form elements (54, 57, 31, 32) of the magnetic system of the rotating magnet (1), and at least one element (54, 57, 31, 32) of the magnetic system is designed along the direction of the circumference (10) depending on the rotation angle (α) of the rotor (5) around the rotational axle (51) changing in such a way that, when the current through the windings (42) of the coil (4) is turned off, a turning moment (M) is the consequence that returns the rotor (5) into its starting position.

2. The rotating magnet according to claim 1, **characterized in that** the stator (3) has a thorn-like center pole (34).

3. The rotating magnet according to any one of the preceding claims, **characterized in that** the first and second partial pole faces (31, 32) have different or equal size.

4. The rotating magnet according to any one of the preceding claims, **characterized in that** at least a part of points of an inside boundary edge (304b) of the first partial pole face (31) has a smaller distance to the rotational axle (51) than at least a part of the points of the outside boundary edge (304c) of the second partial pole face (32).

5. The rotating magnet according to any one of the preceding claims, **characterized in that** on the rotor disc (52) the surfaces (59) of the different magnetic poles (57a, 57b, 57c, 57d) have identical or different sizes.

6. The rotating magnet according to any one of the preceding claims, **characterized in that** the magnetic pole (57a, 57b, 57c, 57d) is limited by boundary edges of the magnetic pole that are located inside or outside with respect to the rotational axle (51) extending essentially in the direction of the circumference, as well as the boundary edges of the magnetic pole are connected by border edges of the magnetic pole.

7. The rotating magnet according to claim 6, **characterized in that** at least one boundary edge of the magnetic pole extends spirally.

8. The rotating magnet according to any one of the preceding claims, **characterized in that** a material is provided for the permanent magnet of the magnetic pole (57a, 57b, 57c, 57d) the remanence of which changes depending on the rotation angle (α) of the rotor (5).

9. The rotating magnet according to any one of the preceding claims, **characterized in that** the respective area sum of the surface parts (591a, 591b, 591c, 591d; 592a, 592b, 592c, 592d) of the magnetic poles assigned to the air gap (54) with each time identical polarity changes depending on the rotation angle (α) of the rotor (5), wherein the surface parts are given by their position on the partial pole faces (31, 32) seen in the direction of the rotational axle (51).

10. The rotational magnet according to claim 9, **characterized in that** the respective area sums of the surface parts (591a, 591b, 591c, 591d; 592a, 592b, 592c, 592d) having each time identical polarity have different sizes.

11. The rotating magnet according to any one of the preceding claims, **characterized in that** the width of the air gap (54) changes depending on the rotation angle (α) of the rotor (5).

12. The rotating magnet according to any one of the preceding claims, **characterized in that** the partial pole faces (31, 32) are coplanar.

13. The rotating magnet according to any one of the claims 1 to 11, **characterized in that** the at least one partial pole face (31, 32) is inclined or curved to a reference plane located vertically to the rotational axle (51) such that the width of the air gap changes depending on the rotation angle (α) of the rotor (5).

14. The rotating magnet according to claim 13, **characterized in that** at least one surface of a magnetic pole (57a, 57b, 57c, 57d) is inclined or curved to a reference plane located vertically to the rotational axle (51) such that the width of the air gap changes depending on the rotation angle (α) of the rotor (5) .

## Revendications

1. Aimant rotatif, consistant en un stator (3) et en un rotor (5) pouvant tourner autour d'un axe de rotation (51) de façon à ce que le rotor (5) comporte un axe de rotor (50) sur lequel est situé un disque de rotor (52) lequel possède des pôles magnétiques (57) polarisés en alternance selon la direction de circonférence (10) du disque de façon à ce que les pôles magnétiques individuels (57a, 57b, 57c, 57d) sont placés à un certain intervalle et à ce que le stator (3) reçoit au moins une bobine (4) comportant l'enroulement (42) d'un fils conducteur pour le courant électrique de façon à ce que l'enroulement (42) enferme l'axe de rotation (51) et à ce que le disque de rotor (52) comporte sur sa face orientée vers la bobine (4) au moins un anneau (53) constitué de pôles magnétiques permanant (57a, 57b, 57c, 57d) et à ce qu'une face de pôle (30) est prévue entre la bobine (4) et le disque de rotor (52), constituée par au moins trois faces de pôle partielles (31, 32) servant à guider le flux magnétique du champ magnétique produit par le courant traversant l'enroulement (42) de la bobine (4) de façon à ce que le stator (3) comporte un pôle central (34) traversant la bobine (4) et supportant la deuxième face de pôle partielle (32) laquelle est située entre deux faces de pôle partielles extérieures (31) et à ce que chaque face de pôle partielle (31, 32) comporte par rapport à l'axe de rotation un bord limitant intérieur et/ou extérieur (304a, 304b) orienté essentiellement selon la direction de la circonférence (10) et, jointifau niveau des bords délimitant (304a, 304b, 304c, 304d) et orientés essentiellement selon la direction de la circonférence (10), un bord délimitant (305a, 305b, 305c, 305d) orienté essentiellement radialement de façon à ce que le bord délimitant (305a, 305b, 305c, 305d) suit, par rapport au rayon vers l'axe de rotation (51) une ligne penchée, en biais, sous forme d'une spirale ou courbée et à ce que la longueur de la deuxième face de pôle partielle intérieure correspond à peu près au rayon de l'anneau (53) des pôles magnétiques (57a, 57b, 57c, 57d) produisant ainsi selon la direction de la circonférence (10) en rotation autour de l'axe de rotation (51) une polarisation magnétique en alternance et ceci, en prévoyant une fente d'air (54) entre le disque de rotor (52) et la face de pôle (30) de façon à ce que les pôles magnétiques (57) du disque de rotor (52), la fente d'air (54) et les faces de pôle partielles (31, 32) de la face de pôle (30) forment des éléments (54, 57, 31, 32) du système magnétique de l'aimant rotatif (1) et en ce qu'au moins un élément (54, 57, 31, 32) du système magnétique est configuré de façon variable selon la direction de circonférence (10) en fonction de l'angle de rotation (α) du rotor (5) autour de l'axe de rotation (51) qu'un moment de rotation (M) est créé poussant le rotor (5) dans la position initiale lorsque le courant traversant l'enroulement (42) de la bobine (4) est coupé.

2. Aimant rotatif selon la revendication 1, **caractérisé en ce que** le stator (3) comporte un pôle central (34) sous forme d'une pointe.

3. Aimant rotatif selon une des revendications précédentes, **caractérisé en ce que** la première et la deuxième face de pôle partielle (31, 32) sont de tailles différentes ou identiques.

4. Aimant rotatif selon une des revendications précédentes, **caractérisé en ce qu'**au moins une partie des points situés sur le bord délimitant intérieur (304b) de la première face de pôle partielle (31) possèdent une distance à l'axe de rotation (51) inférieure à au moins une partie des points situés sur le bord délimitant extérieur (304c) de la deuxième face de pôle partielle (32).

5. Aimant rotatif selon une des revendication précédentes, **caractérisé en ce que** les surfaces (59) des différents pôles magnétiques (57a, 57b, 57c, 57d) au niveau du disque de rotor (52) sont de tailles identiques ou différentes.

6. Aimant rotatif selon une des revendications précédentes, **caractérisé en ce que** le pôle magnétique (57a, 57b, 57c, 57d) est délimité par des bords délimitant orientés essentiellement selon la direction de la circonférence et situés à l'intérieur ou à l'extérieur par rapport à l'axe de rotation (51) et **en ce que** ces bords délimitant le pôle magnétique sont liés par des bords de pôle magnétique.

7. Aimant rotatif selon la revendication 6, **caractérisé en ce qu'**au moins un bord délimitant le pôle magnétique suit une ligne d'une spirale.

8. Aimant rotatif selon une des revendications précédentes, **caractérisé en ce qu'**un matériau est prévu pour la réalisation de l'aimant permanent (57a, 57b, 57c, 57d) dont la rémanence peut être modifiable en fonction de l'angle de rotation (α) du rotor (5).

9. Aimant rotatif selon une des revendications précédentes, **caractérisé en ce que** la somme des surfaces partielles (591a, 591b, 591c, 591d ; 592a, 592b, 592c, 592d) des pôles magnétiques proches de la fente d'air (54), de la même polarité et situées selon la direction de l'axe de rotation (51) sur les faces de pôle partielles (31, 32) est différente en fonction de l'angle de rotation (α) du rotor (5).

10. Aimant rotatif selon la revendication 9, **caractérisé en ce que** la somme de surfaces partielles (591a, 591b, 591c, 591d ; 592a, 592b, 592c, 592d) de polarités identiques sont différentes.

11. Aimant rotatif selon une des revendications précédentes, **caractérisé en ce que** la largeur de la fente d'air (54) est différente en fonction de l'angle de rotation (α) du rotor (5).

12. Aimant rotatif selon une des revendications précédentes, **caractérisé en ce que** les faces de pôle partielles (31, 32) sont coplanaires.

13. Aimant rotatif selon une des revendications 1 à 11, **caractérisé en ce qu'**au moins une face de pôle partielle (31, 32) est inclinéeou courbée par rapport à un plan de référence perpendiculaire à l'axe de rotation (51) de façon à ce que la largeur de la fente d'air (54) change en fonction de l'angle de rotation (α) du rotor (5).

14. Aimant rotatif selon la revendication 13, **caractérisé en ce qu'**au moins une surface d'un pôle magnétique (57a, 57b, 57c, 57d) est inclinée ou courbée par rapport à un plan de référence perpendiculaire à l'axe de rotation (51) de façon à ce que la largeur de la fente d'air change en fonction de l'angle de rotation (α) du rotor (5).
